# EUROPEAN PATENT APPLICATION

(11) **EP 4 607 837 A1**
(43) Date of publication of application: **27.08.2025**
(21) Application number: 23920729.3
(22) Date of filing: 22.09.2023
(51) Int. Cl.: H04L 5/00

(54) **SIGNAL RECEPTION METHOD AND TRANSMISSION METHOD, COMMUNICATION DEVICE, AND STORAGE MEDIUM**

(30) Priority: 09.02.2023 CN 202310143262
(71) Applicant: ZTE Corporation, Shenzhen, Guangdong 518057 (CN)
(72) Inventor: LIU, Wenfeng, Shenzhen, Guangdong 518057 (CN); ZHENG, Guozeng, Shenzhen, Guangdong 518057 (CN); LU, Zhaohua, Shenzhen, Guangdong 518057 (CN); WANG, Yuxin, Shenzhen, Guangdong 518057 (CN); XIAO, Huahua, Shenzhen, Guangdong 518057 (CN)
(74) Representative: Savi, Massimiliano
(86) International application number: PCT/CN2023/120739
(87) International publication number: WO 2024/164537

(57) **Abstract**

Embodiments of the present disclosure provide a signal reception method, a signal transmission method, a communication device, and a storage medium. The signal reception method comprises: utilizing a target reception mode to receive a reference signal resource set sent by a first communication device according to received index configuration information.

## Description

### CROSS-REFERENCE TO RELATED APPLICATION

The present disclosure is filed on the basis of Chinese patent application No. 202310143262.2 filed February 9, 2023, and claims priority of the Chinese patent application, the entire contents of which are incorporated herein by reference.

### TECHNICAL FIELD

Embodiments of the present disclosure relate to the technical field of communications, and in particular, to a signal reception method and transmission method, a communication device, and a storage medium.

### BACKGROUND

In a related protocol, transmission beam scanning and reception beam scanning may be implemented implicitly by configuring resource control high-level parameters. Due to the fact that the reception of beam information by a terminal device is transparent to a base station, the scanning of joint transmission-reception beam pairs is not explicitly specified in the related protocol, but depends on the specific configuration implementation. At present, the configuration of a transmission-reception beam pair scanning mode is relatively simple and has poor flexibility, which is not conducive to the dynamic transmission or reception of resources.

### SUMMARY

In accordance with an embodiment of the present disclosure, a signal reception method and transmission method, a communication device, and a storage medium which aim to achieve flexible dynamic configuration, transmission, or reception of resources are provided.

An embodiment in accordance with an aspect of the present disclosure provides a signal reception method, which includes:
receiving a reference signal resource set, which is transmitted by a first communication device, in a target reception mode according to received index configuration information.

An embodiment in accordance with another aspect of the present disclosure provides a signal transmission method, which includes:
transmitting a reference signal resource set to a second communication device in a target transmission mode according to index configuration information.

An embodiment in accordance with yet another aspect of the present disclosure provides a communication device, which includes: at least one processor; at least one memory configured to store at least one program, where the at least one program, when executed by the at least one processor, implements the aforementioned signal reception method or signal transmission method.

An embodiment in accordance with still another aspect of the present disclosure provides a computer-readable storage medium storing a processor-executable program which, when executed by a processor, implements the aforementioned signal reception method or signal transmission method.

In accordance with the signal reception method and transmission method, communication device, and storage medium provided by the embodiments of the present disclosure, a reference signal resource set transmitted by a first communication device is received according to received index configuration information. Since the index configuration information may be dynamically configured, the reference signal resource set may be received according to index configuration information received in a specific application scenario in a target reception mode corresponding to the index configuration information, thereby achieving flexible dynamic configuration and reception of resources.

### BRIEF DESCRIPTION OF DRAWINGS

Fig. 1 is a schematic diagram of an implementation environment for performing a signal reception method or a signal transmission method provided by an embodiment of the present disclosure;
Fig. 2 is a flow chart of a signal reception method provided by an embodiment of the present disclosure;
Fig. 3 is a flow chart of a signal reception method provided by another embodiment of the present disclosure;
Fig. 4 is a schematic diagram of transmission-reception beam pair scanning provided by an embodiment of the present disclosure;
Fig. 5 is a schematic diagram of a reference signal resource set configured based on subset index information provided by an embodiment of the present disclosure;
Fig. 6 is a schematic diagram of a reference signal resource set configured based on subset index information provided by another embodiment of the present disclosure;
Fig. 7 is a schematic transmission diagram of a reference signal resource set configured based on repeated transmission index information provided by an embodiment of the present disclosure;
Fig. 8 is a flow chart of a signal reception method provided by another embodiment of the present disclosure;
Fig. 9 is a schematic diagram of transmission-reception beam pair scanning provided by another embodiment of the present disclosure;
Fig. 10 is a flow chart of a signal transmission method provided by an embodiment of the present disclosure;
Fig. 11 is a flow chart of a signal transmission method provided by another embodiment of the present disclosure;
Fig. 12 is a flow chart of a signal transmission method provided by another embodiment of the present disclosure;
Fig. 13 is a schematic diagram of activating a configured reference signal resource set provided by an embodiment of the present disclosure;
Fig. 14 is a schematic diagram of activating a configured reference signal resource set provided by another embodiment of the present disclosure; and
Fig. 15 is a schematic diagram of a communication device provided by an embodiment of the present disclosure.

### DETAILED DESCRIPTION

In order to make the objectives, technical schemes and advantages of the present disclosure clear, the present disclosure will be further described in detail below in conjunction with the drawings and embodiments. It should be understood that the specific embodiments described herein are only used to explain the present disclosure and are not to limit the present disclosure.

It should be noted that although functional modules are divided in a schematic diagram of a device, and a logical sequence is shown in a flow chart, in some cases, the steps shown or described may be performed in an order different from that in module division in the device or in the flowchart. The terms such as "first", "second" and the like in the description, claims, and above-mentioned drawings are used to distinguish similar objects and are not necessarily used to describe a specific order or sequence.

In the embodiments of the present disclosure, words such as "further", "exemplarily" or "optionally" are used to indicate examples, instances or illustrations, and should not be interpreted as being more preferable or more advantageous than other embodiments or design schemes. The use of the words "further," "exemplarily," or "optionally" is intended to present the related concepts in a specific manner.

In the related technology, a next-generation cellular networks will utilize a millimeter wave frequency band to significantly increase network capacity. However, the millimeter wave frequency band has the problems such as high propagation loss, poor reflection and diffraction performance, vulnerability to occlusion of transmission channels, and the like, which bring new challenges to the design of communication protocol stacks and greatly affect the end-to-end performance of a network and the user service quality. For this reason, in a millimeter wave communication system, large-scale antenna arrays are usually adopted to form shaped beams with large gain to compensate for transmission losses and ensure system coverage. Meanwhile, both a user and a base station need to adjust their beams and achieve precise alignment during initial access and data transmission to ensure maximum gain. The 3rd Generation Partnership Project (3GPP) organization has developed a complete set of beam management procedures to adjust the beam direction of high-frequency bands and maintain a suitable transmission-reception beam pair, including beam scanning, beam measurement, beam reporting and beam indication.

In a typical beam management process, a base station configures a plurality of reference signal resources for beam measurement for a terminal device, including CSI-Reference Signals (CSI-RS) or Synchronization Signal and PBCH blocks (SSB), and these reference signal resources are carried on different downlink transmission beams respectively. The terminal device measures these reference signals and reports beam measurement results to the base station.

The reported parameters of beam measurement include a reference signal resource index SSBRI/CRI, a Physical Layer Reference Signal Receiving Power (L1-RSRP) or a Physical Layer Signal to Interference plus Noise Ratio ( L1-SINR) corresponding to one or more transmission beams selected by the terminal device.

In a related protocol, transmission beam scanning and reception beam scanning may be implemented implicitly by configuring resource control high-level parameters. Due to the fact that the reception of beam information by a terminal device is transparent to a base station, the scanning of joint transmission-reception beam pairs is not explicitly specified in the related protocol, but depends on the specific configuration implementation. At present, the configuration means of a transmission-reception beam pair scanning mode is relatively simple and has poor flexibility, which is not conducive to the dynamic transmission or reception of resources.

Based on this, the present disclosure provides a signal reception method and transmission method, a communication device, and a storage medium. In an embodiment, the signal reception method includes: receiving a reference signal resource set transmitted by a first communication device in a target reception mode according to received index configuration information. In the embodiment, the reference signal resource set transmitted by the first communication device is received according to the received index configuration information. Since index configuration information can be dynamically configured, the reference signal resource set can be received in a target reception mode corresponding to the index configuration information received in a specific application scenario, thereby achieving flexible dynamic configuration and reception of resources.

The embodiments of the present disclosure will be further described below in conjunction with the accompanying drawings.

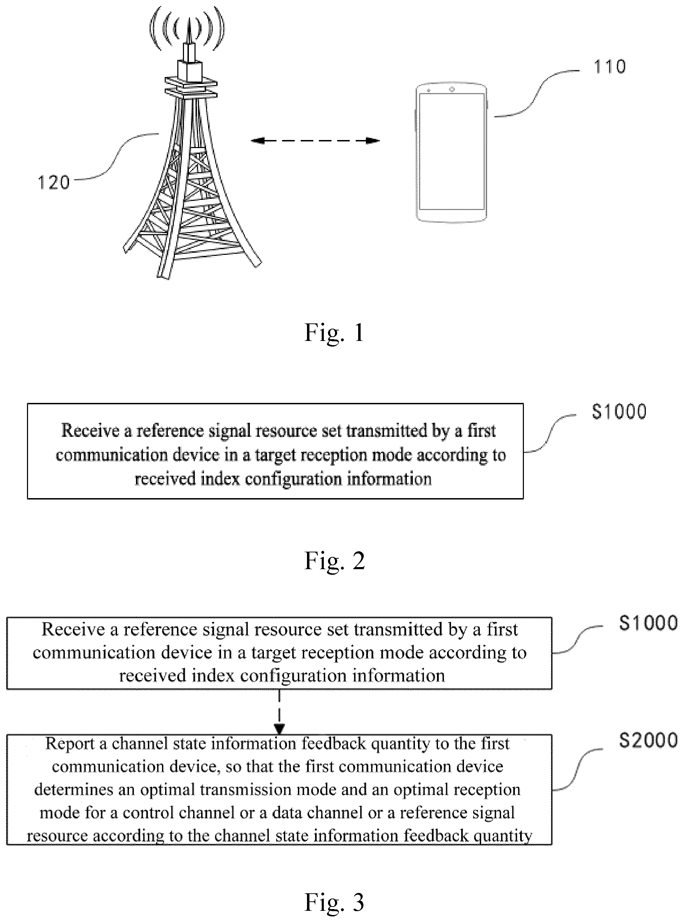

As shown in Fig. 1, Fig. 1 is a schematic diagram of an implementation environment for performing a signal reception method or a signal transmission method provided by an embodiment of the present disclosure.

In an example of Fig. 1 , the implementation environment includes a second communication device 110 and a first communication device 120, where wireless signals may be transmitted or received between the first communication device 120 and the second communication device 110.

It should be noted that the relative positions of the first communication device 120 and the second communication device 110 may be set accordingly in specific application scenarios. For example, the second communication device 110 may move along a radiation sphere which is formed by the first communication device 120 when signals are radiated to the outside, that is to say, if there are a plurality of second communication devices 110 and different second communication devices 110 are set in the above mode, wireless signals transmitted by the first communication device 120 can be received at different spatial locations, it is worth noting that the spatial locations here may be different geographical conditions.

In an embodiment, when the second communication device 110 is a terminal device (also called UE), the first communication device 120 may be, but is not limited to, a base station. The base station in this embodiment of the present disclosure may be an evolved NodeB (eNB), a Transmission Reception Point (TRP), a Next Generation NodeB (gNB) in an NR system, a base station in other future mobile communication systems or an access node in a Wireless Fidelity (WiFi) system, or the like. The specific technologies and specific equipment forms adopted by all communication devices are not limited in the embodiments of the present disclosure. The UE may be referred to as an access terminal, a subscriber unit, a subscriber station, a mobile radio station, a mobile station, a remote station, a remote terminal, a mobile device, a user terminal, a wireless communication device, a user agent, or a user device. For example, the UE may be a cellular phone, a cordless phone, a Session Initiation Protocol (SIP) phone, a Wireless Local Loop (WLL) station, a Personal Digital Assistant (PDA), a hand-held device with wireless communication functions, a computing device or an additional processing device connected to a wireless modem, a vehicle-mounted device, a wearable device, a terminal device in a 5G network or in future networks beyond 5G, or the like, which will not be specifically limited in this embodiment.

It should be noted that the beams in the embodiments of the present disclosure are only for convenience of description and should not be regarded as arbitrarily limiting the embodiments of the present disclosure.

A transmission beam in the present disclosure is used to indicate a transmission mode, and its transmission mode parameters include at least one of the following:
transmission beam;
transmission antenna;
transmission sector;
pre-coding at a sender;
antenna port;
antenna weight vector;
antenna weight matrix;
transmission mode corresponding to space division multiplexing mode;
transmission mode corresponding to frequency domain diversity transmission;
transmission mode corresponding to time domain diversity transmission;
transmission sequence;
number of transmission layers;
transmission manner;
modulation coding mode;
reference signal; or
transmission filterer.

A reception beam in the present disclosure is used to indicate a reception mode, and its reception mode parameters include at least one of the following:
reception beam;
reception antenna;
reception antenna panel;
reception sector; or
reception filter.

The second communication device 110 at least has a function of receiving a reference signal resource set transmitted by the first communication device 120 in a target reception mode according to received index configuration information.

The first communication device 120 at least has a function of transmitting a reference signal resource set to the second communication device 110 in a target transmission mode according to index configuration information.

It should be noted that the above functions of the first communication device 120 and the second communication device 110 may be applied to different application scenarios, which are not limited here.

Those having ordinary skill in the art can understand that this implementation environment may be applied to a 5G or 6G communication network system and a subsequently evolved mobile communication network system, and the like, which will not be specifically limited in this embodiment.

Those having ordinary skill in the art can understand that the implementation environment shown in Fig. 1 does not constitute a limitation to the embodiments of the present disclosure, and may include more or less components than shown in the figure, or combine certain components, or have different component arrangements.

Based on the implementation environment shown in Fig. 1, various embodiments of the signal reception method or the signal transmission method of the present disclosure are proposed below.

As shown in Fig. 2, Fig. 2 is a flow chart of a signal reception method provided by an embodiment of the present disclosure. The signal reception method may be, but is not limited to, applied to the second communication device 110 in the implementation environment shown in Fig. 1. The signal reception method may include but is not limited to step S1000.

At S1000, a reference signal resource set transmitted by a first communication device is received in a target reception mode according to received index configuration information.

It should be noted that the second communication device in this embodiment may be, but is not limited to, a UE, and the first communication device in this embodiment may be, but is not limited to, a base station. Alternatively, those having ordinary skill in the art may select and set a corresponding first communication device or second communication device according to an actual application scenario, which will not be limited in this embodiment. In order to more conveniently describe the application scenarios and working principles of the present disclosure, they are described in the following related embodiments only with the UE as the second communication device and the base station as the first communication device, which should not be understood as limitations to the embodiments of the present disclosure.

In this step, the reference signal resource set transmitted by the first communication device is received according to the received index configuration information. Since the index configuration information can be dynamically configured, the reference signal resource set can be received in a target reception mode corresponding to the index configuration information according the index configuration information received in a specific application scenario, thereby realizing flexible dynamic configuration and reception of resources.

In an embodiment, the index configuration information is used to indicate a reception mode in which the reference signal resource set is received. That is to say, by associating the reception mode of the reference signal resource set with the index configuration information, a reception mode of the UE is implicitly indicated, and an explicit and configurable transmission-reception beam pair scanning process is implemented, so that the UE can determine the target reception mode for receiving the reference signal resource set according to the index configuration information, and thereby receiving the reference signal resource set transmitted by the base station in the target reception mode.

In an embodiment, the index configuration information may include, but is not limited to:
subset index information;
   or,
repeated transmission index information.

The subset index information or the repeated transmission index information may be set accordingly in specific application scenarios, which will not be limited here, and will be explained one by one with several implementations provided below.

In an embodiment, the index configuration information may include, but is not limited to, a reception panel index, a reception beam index, a reception beam angle, a virtual index, transmission configuration indication state information, a reception antenna, a reception sector, and a reception filterer, where the virtual index may represent, but is not limited to a projection of the reception panel index, the reception beam index or the reception beam angle in a common space, and is used to indicate the reception panel, the reception beam or the reception beam angle which is used to measure the reference signal resource set.

In an embodiment, when the index configuration information includes the subset index information, the subset index information includes a plurality of subset indexes, the reference signal resource set is divided into a plurality of reference signal resource groups, and one of the subset indexes is correspondingly configured for each of the reference signal resource groups, where all the subset indexes may be identical or may be different, the number of the reference signal resource groups is not limited, and all the above parameters may be set accordingly according to specific application scenarios.

In an embodiment, a downlink parameter is configured for each reference signal resource group, and the downlink parameter is configured to indicate transmission state information carried by the reference signal resource group, where the transmission state information carried by all the reference signal resource group does not affect each other, that is, all the reference signal resource groups are configured with respective downlink parameters. The downlink parameters may be identical or may be different, which will not be limited here.

In an embodiment, when a value of the transmission state information is a first preset value, it means that the first communication device does not use the same downlink spatial transmission filter to transmit all reference signal resources in the reference signal resource groups. Alternatively, when the value of the transmission state information is a second preset value, it means that the first communication device uses the same downlink spatial transmission filter to transmit all reference signal resources in the reference signal resource groups. In an implementation, when configuring the reference signal resource set, the base station groups different reference signal resources under the same set, and configures a subset index for each reference signal resource group. This subset index implicitly indicates a transmission mode at the base station side or a reception mode at the UE side. When the subset index is defaulted or not configured, it means that the transmission mode at the base station side or the reception mode at the UE side is transparent to a node at the other side, and different reference signal resource groups under the same reference signal resource set may be configured with "repetition" parameters respectively. In an implementation, if the "repetition" parameter of the reference signal resource group is set to 'on', the UE should assume that all reference signal resources under the reference signal resource group are transmitted using the same downlink spatial transmission filter; and if the "repetition" parameter of the reference signal resource group is set to 'off' or defaulted, the UE should not assume that all reference signal resources under the reference signal resource group are transmitted using the same downlink spatial transmission filter.

In an embodiment, when a value of the transmission state information is a first preset value, a plurality of different first reception modes are switched according to all the subset indexes to receive all the reference signal resource groups respectively, and all reference signal resources in the reference signal resource groups are received in the same second reception mode according to the transmission state information. That is to say, when the value of the transmission state information is the first preset value, all the reference signal resource groups and reference signal resources in each reference signal resource group are received respectively to achieve effective reception of the entire reference signal resource set.

In an embodiment, when the value of the transmission state information is a second preset value, each of the reference signal resource groups is received in the same third reception mode according to all the subset indexes, and a plurality of different fourth reception modes are switched according to the transmission state information to receive all reference signal resources in the reference signal resource groups respectively. That is to say, when the value of the transmission state information is the second preset value, all the reference signal resource groups and reference signal resources in each reference signal resource group are received respectively to achieve effective reception of the entire reference signal resource set.

In an embodiment, when the index configuration information includes subset index information, the subset index information is carried through radio resource control signaling, media access control-control element signaling or downlink control information signaling.

As shown in Fig. 3, in an embodiment of the present disclosure, the signal reception method further includes but is not limited to step S2000.

At S2000, a channel state information feedback quantity is reported to a first communication device, so that the first communication device determines an optimal transmission mode and an optimal reception mode for a control channel, a data channel or a reference signal resource according to the channel state information feedback quantity.

In this step, by reporting parameters of the channel state information feedback quantity to a base station, the base station can determine the optimal transmission mode and the optimal reception mode for the control channel, the data channel, or the reference signal resource according to the channel state information feedback quantity based on processing results of deployed functional modules, so that the base station can associate a corresponding subset index, for the UE, with transmission of other reference signal resource, transmission in the data channel or transmission in the control channel respectively, to indicate a UE reception mode or a base station transmission mode.

In an embodiment, the optimal transmission mode and the optimal reception mode may be applied in various forms, for example, may be, but are not limited to, optimal transmission beam and the optimal reception beam, and the like, which will not be limited here.

In an embodiment, the channel state information feedback quantity may include, but is not limited to: at least one piece of reference signal resource index information, a channel state information measurement result or index configuration information, where the channel state information measurement result includes but is not limited to L1-RSRP or L1-SINR.

In an embodiment, when the index configuration information includes subset index information and the channel state information measurement result includes first measurement results for different reference signal resources in the same reference signal resource group of which the number is a third preset value, it means that the first communication device is requested to transmit target reference signal resources of which the number of is the third preset value. Alternatively, when the index configuration information includes subset index information and the channel state information measurement result includes second measurement results for the same reference signal resource index of which the number is the third preset value, it means that the first communication device is requested to transmit target reference signal resources of which the number is the third preset value. Through the above configuration of the channel state information measurement result, the base station can configure reference signal resources on corresponding beams after responding to the UE request, thereby assisting the UE in obtaining optimal reception beam information.

In an embodiment of the present disclosure, the signal reception method further includes but is not limited to step S3000.

At S3000, optimal index configuration information transmitted by the first communication device is received, where the optimal index configuration information corresponds to the optimal reception mode, and the optimal index configuration information is configured to indicate a reception mode for the control channel, the data channel or the reference signal resource.

In this step, the base station can associate optimal index configuration information with transmission in the control channel, transmission in the data channel or transmission of the reference signal resource respectively, to indicate the UE reception mode or the base station transmission mode, that is, by transmitting the optimal index configuration information, it is conducive to implement an explicit and configurable transmission-reception beam pair scanning process.

Several examples are given below to clearly illustrate the working principles of the above related embodiments.

### Example one:

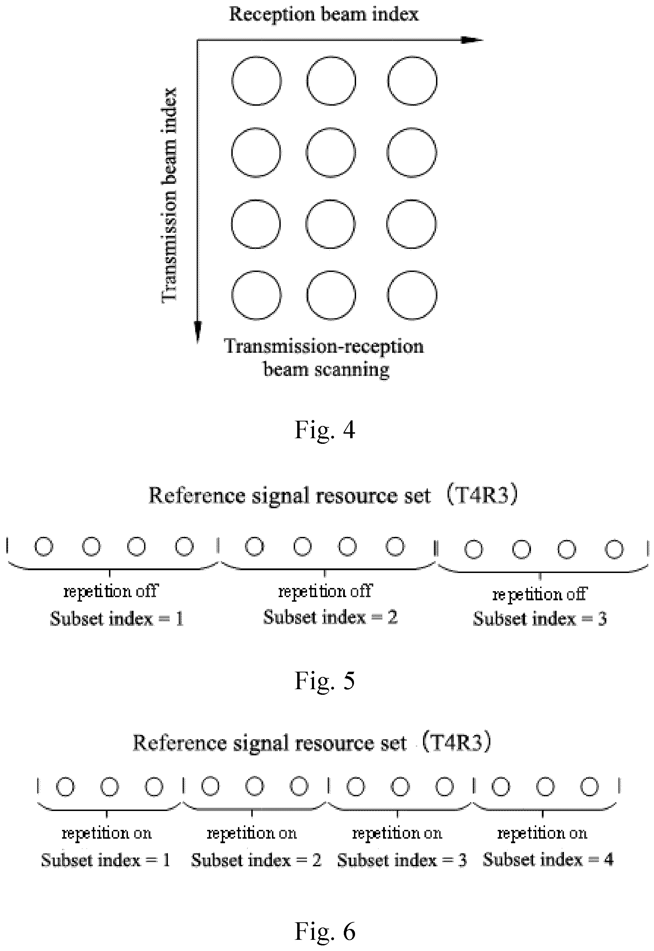

Taking transmission-reception beam pair scanning as an example, as shown in Fig. 4, in order to obtain a transmission-reception beam pair with optimal channel quality, one transmission-reception beam pair scanning needs to be completed, in which the number of transmission beams and reception beams are four and three respectively.

One implementation is to complete one transmission-reception beam pair scanning process through a plurality of transmission beam scanning. In an implementation, the base station configures a set including twelve reference signal resources and divides the set into three subsets, that is, into three reference signal resource groups, each subset including four reference signal resources, as shown in Fig. 5. For the same subset, its repetition parameter is set to 'off', which means that the UE should not assume that all reference signal resources under the subset are transmitted using the same downlink spatial transmission filter, that is, the four reference signal resources under the subset are transmitted using four different transmission beams. Therefore, the UE maintains the same reception beam to receive the subset, thereby realizing one transmission beam scanning process. Meanwhile, for different subsets, each subset is associated with a subset index, and the subset indexes are in one-to-one correspondence with the UE reception beams, implicitly indicating that the UE should use different reception beams to receive the three subsets respectively. Therefore, the terminal device uses three different reception beams to measure these three different subsets respectively, and reports the selected one or more reference signal resource indexes SSBRI/CRI, beam measurement results L1-RSRP/L1-SINR and the corresponding subset indexes to the base station, thereby completing one transmission-reception beam pair scanning process.

Another implementation is to complete one transmission-reception beam pair scanning process through a plurality of reception beam scanning. In an implementation, the base station configures a set including twelve reference signal resources and divides the set into four subsets, each subset including three reference signal resources, as shown in Fig. 6. For the same subset, its repetition parameter is set to 'on', which means that the UE should assume that all reference signal resources under the subset are transmitted using the same downlink spatial transmission filter, that is, the three reference signal resources under the subset are transmitted using the same transmission beam. Therefore, the UE uses three different reception beams to receive the subset, thereby realizing one reception beam scanning process. Meanwhile, for different subsets, each subset is associated with a subset index, and the four subset indexes are in one-to-one correspondence with the four transmission beams at the base station side. The base station transmits different subsets by switching different transmit beams, thereby completing one transmission-reception beam pair scanning process.

Considering that the same subset may include a plurality of reference signal resources, optionally, when the reporting content of the UE includes measurement results of N (N>1) different reference signal resources under the same subset, or includes N (N>1) different measurement results of the same reference signal resource index SSBRI/CRI, it means that the UE actively requests one reception beam scanning process from the base station, and the number of reference signal resources the UE requests to transmit is N. For example, when a functional module deployed at the UE side predicts three candidate beam pairs, such as the second row of beam pairs shown in Fig. 4, these three candidate beam pairs indicate that three different reception beams are used to receive the same transmission beam, so the corresponding subset indexes are the same. When the UE reports these three optimal candidate beam pairs, it means that the UE actively requests one reception beam scanning process, and the number of reference signal resources the UE requests to transmit is three. After responding to the UE request, the base station can configure reference signal resources on corresponding beams, thereby assisting the UE in obtaining optimal reception beam information.

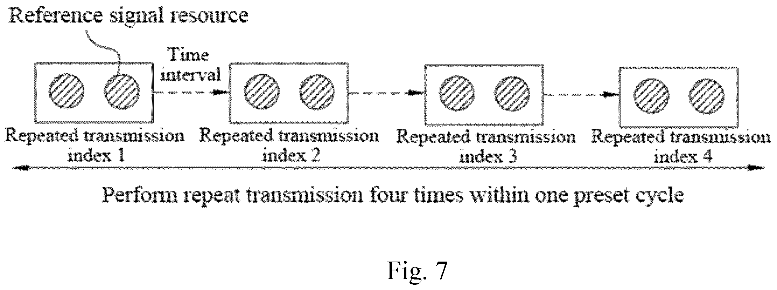

In an embodiment, when the index configuration information includes repeated transmission index information, the repeated transmission index information includes a plurality of repeated transmission indexes, and a number of repeated transmissions and time intervals between adjacent repeated transmissions configured by the first communication device. According to the plurality of repeated transmission indexes, the number of repeated transmissions, and the time intervals between adjacent repeated transmissions, the reference signal resource set is repeatedly received within a preset cycle, where a repeated transmission index is correspondingly configured for the reference signal resource set received each time. In an implementation, the reference signal resource set can be configured for periodic transmission, semi-persistent transmission or aperiodic transmission. As shown in Fig. 7, for the configured reference signal resource set, a plurality of reference signal resources contained in the configured reference signal resource set are repeatedly transmitted for many times in one cycle. The number of repeated transmissions and the time intervals between adjacent repeated transmissions may, but are not limited to, be configured by the base station. In addition, each repeated transmission is configured with a repeated transmission index, which implicitly indicates the reception mode of the terminal device. When performing CSI reporting or beam reporting, the terminal device needs to report the selected one or more reference signal resource indexes SSBRI/CRI, beam measurement results L1-RSRP/L1-SINR and corresponding repeated transmission indexes. In addition, the base station can associate a repeated transmission index with transmission of other reference signal resource, transmission in the data channel or transmission in the control channel respectively, to indicate the reception mode of the terminal device.

In an embodiment, the UE can repeatedly receive all reference signal resources in the reference signal resource set according to all the repeated transmission indexes, the number of repeated transmissions, and the time intervals of adjacent repeated transmissions, and repeatedly receive the reference signal resource set within a preset cycle in cooperation with the plurality of repeated transmission indexes, the number of repeated transmissions, and the time intervals of adjacent repeated transmissions, thereby achieving repeated reception of the reference signal resource set and all reference signal resources in the reference signal resource set, and thus completing one transmission-reception beam pair scanning process.

In an embodiment, a downlink parameter is configured for the reference signal resource set, and the downlink parameter is configured to indicate transmission state information carried by the reference signal resource set. The specific type of the configured downlink parameter is not limited, which may be selectively set according to specific application scenarios.

In an embodiment, when a value of the transmission state information is a first preset value, it means that the first communication device does not use the same downlink spatial transmission filter to transmit all reference signal resources in the reference signal resource set; alternatively, when the value of the transmission state information is a second preset value, it means that the first communication device uses the same downlink spatial transmission filter to transmit all reference signal resources in the reference signal resource set. In an implementation, when the repeated transmission index is defaulted or not configured, it means that the transmission mode at the base station side or the reception mode at the UE side is transparent to a node at the other side, and for the reference signal resource set, a "repetition" parameter may be configured for the reference signal resource set. In an implementation, if the "repetition" parameter of the reference signal resource set is set to 'on', the UE should assume that all reference signal resources under the reference signal resource set are transmitted using the same downlink spatial transmission filter; and if the "repetition" parameter of the reference signal resource set is set to 'off' or defaulted, the UE should not assume that all reference signal resources under the reference signal resource set are transmitted using the same downlink spatial transmission filter.

In an embodiment, when a value of the transmission state information is a first preset value, all reference signal resources in the reference signal resource set are received in the same fifth reception mode respectively according to all repeated transmission indexes, the number of repeated transmissions and the time intervals of adjacent repeated transmissions, and a plurality of sixth reception modes are switched according to the transmission state information to repeatedly receive the reference signal resource set, so as to achieve effective reception of the entire reference signal resource set and complete one transmission-reception beam scanning process.

In an embodiment, when the value of the transmission state information is a second preset value, different seventh reception modes are switched to receive all reference signal resources in the reference signal resource set according to all repeated transmission indexes, the number of repeated transmissions and the time intervals of adjacent repeated transmissions, and the reference signal resource set is repeatedly received in the same eighth reception mode according to the transmission state information, so as to achieve effective reception of the entire reference signal resource set and complete one transmission-reception beam scanning process.

Several examples are given below to clearly illustrate the working principles of the above related embodiments.

### Example two:

Transmission-reception beam pair scanning is taken as an example. It is assumed that in order to obtain a transmission-reception beam pair with optimal channel quality, one transmission-reception beam pair scanning needs to be completed, in which the numbers of transmission beams and reception beams are two and four respectively. As shown in Fig. 7, the reference signal resource set that the base station needs to configure includes two different reference signal resources. The two reference signal resources are carried by different transmission beams respectively. The 'repetition' parameter of the corresponding reference signal resource set is configured to 'off'. Meanwhile, the base station configures the number of repeated transmissions of the reference signal resource set to four, which means that the two reference signal resources will be repeatedly transmitted four times within one cycle, and each repeated transmission will be configured with an additional re-transmission index 1-4. Other parameters such as time interval, reference signal resource set cycle, number of repeated transmissions, and the like may be flexibly configured according to predefined values. Since the 'repetition' parameter of the reference signal resource set is configured to 'off', the UE uses the same reception beam to receive two resources in the same re-transmission index, and uses four different reception beams to receive resources in different re-transmission indexes, thereby completing one transmission-reception beam pair scanning.

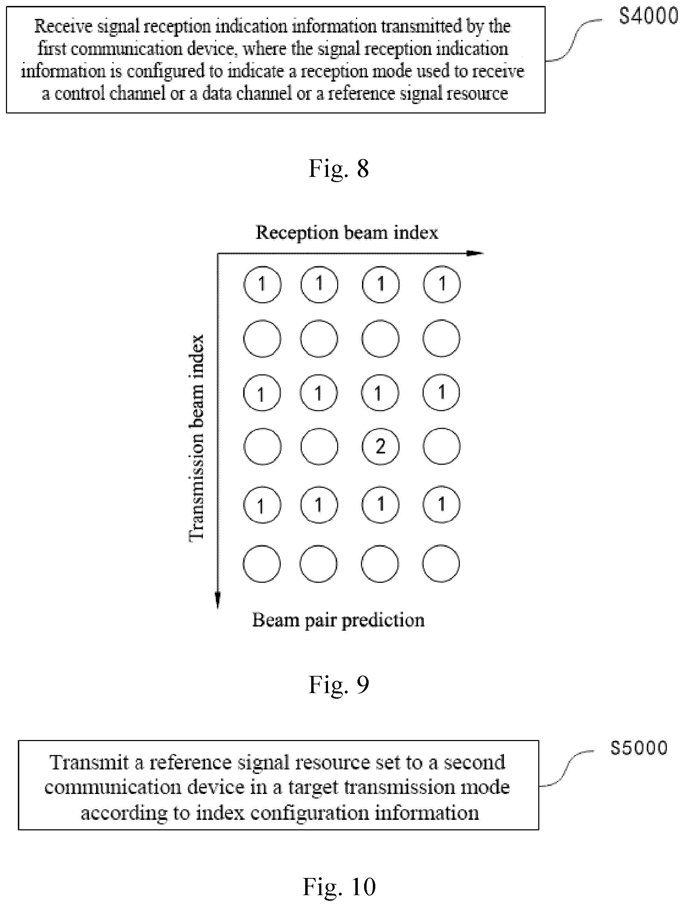

As shown in Fig. 8, in an embodiment of the present disclosure, the signal reception method further includes but is not limited to step S4000.

At S4000, signal reception indication information transmitted by the first communication device is received, where the signal reception indication information is configured to indicate a reception mode for a control channel, a data channel or a reference signal resource.

In this step, the existing resource configuration and reporting modes are enhanced, that is, when configuring reference signal resources or reference signal resource sets for beam measurement, the base station associates a reception beam index for the reference signal resources or reference signal resource sets respectively to indicate reception beams used by the UE when performing measurement. Meanwhile, after performing beam measurement, the UE reports the reception beam index corresponding to each reference signal resource or reference signal resource set to assist the base station in distinguishing different beam measurement results. Then, a functional module deployed at the base station side directly predicts the optimal beam information according to the beam measurement results reported by the terminal device, and indicates the signal reception indication information corresponding to the optimal beam to the UE through radio resource control signaling, media access control-control element signaling or downlink control information signaling, thereby indicating to the UE the reception mode for the control channel, data channel or reference signal resource.

In an embodiment, the signal reception indication information includes at least one of the following:
a reception panel index, configured to indicate a reception panel which is used to measure the reference signal resource set;
a reception beam index, configured to indicate a reception beam which is used to measure the reference signal resource set;
a reception beam angle, configured to indicate an angle of the reception beam which is used to measure the reference signal resource set;
a virtual index, representing a projection of the reception panel index, the reception beam index or the reception beam angle in a common space, and configured to indicate the reception panel, the reception beam or the reception beam angle which is used to measure the reference signal resource set;
transmission configuration indication state information, configured to indicate a spatial reception parameter which is used to measure the reference signal resource set;
a reception antenna;
a reception sector; or
reception filterer.

When configuring a reference signal resource, a reference signal resource set, a control channel or a data channel, the base station can associate signal reception indication information therewith, respectively, to indicate the reception method used by UE when performing reference signal resource measurement or signal reception. method. Meanwhile, when configuring CSI reporting or beam reporting, the base station adds a new reporting parameter to instruct the UE to report the corresponding reception mode.

Several examples are given below to clearly illustrate the working principles of the above related embodiments.

### Example three:

A reception beam index is taken as an example to explain in detail below. As shown in Fig. 9, considering that the functional module deployed at the base station side can directly predict the optimal beam information (i.e., circle "2" in Fig. 9) based on measurement results of some beams (i.e., all circles "1" in Fig. 9) , so that the remaining beams (i.e., the remaining circles in Fig. 9) do not need to be transmitted, which can effectively reduce the reference signal resource overhead used for beam training, measurement power consumption and processing delay.

As shown in Fig. 9, each transmission beam can be measured by a different reception beam. In order to assist the base station in distinguishing different beam measurement results, the UE needs to report the identification information of reception beams in the beam report. However, in existing protocol, the reported parameters of beam measurement only include the reference signal resource index SSBRI/CRI and the beam measurement result L1-RSRP/L1-SINR corresponding to one or more transmission beams selected by the UE. For each reported L1-RSRP/L1-SINR, the reception beam used by the UE is transparent to the base station.

According to the method provided in this embodiment, the existing resource configuration and reporting modes are enhanced. First, when configuring the reference signal resources or reference signal resource sets for beam measurement, the base station associates a receive beam index for the reference signal resources or reference signal resource sets respectively to indicate reception beams used by the terminal device when performing measurement. Meanwhile, after performing beam measurement, the UE reports the reception beam index corresponding to each reference signal resource or reference signal resource set to assist the base station in distinguishing different beam measurement results. Then, the functional module deployed at the base station side directly predicts the optimal beam information according to the beam measurement results reported by the UE, and indicates reception mode corresponding to the optimal beam to the UE through radio resource control signaling, media access control-control element signaling or downlink control information signaling.

As shown in Fig. 10, Fig. 10 is a flow chart of a signal transmission method provided by an embodiment of the present disclosure. The signal transmission method may be, but is not limited to, applied to the first communication device 120 in the implementation environment shown in Fig. 1. The signal transmission method may include but is not limited to step S5000.

At S5000, a reference signal resource set is transmitted to the second communication device in a target transmission mode based on index configuration information.

It should be noted that the second communication device in this embodiment may be, but is not limited to, a UE, and the first communication device in this embodiment may be, but is not limited to, a base station; alternatively, those having ordinary skill in the art may selectively set the corresponding first communication device or second communication device according to actual application scenarios, which will not be limited in this embodiment. In order to more conveniently describe the application scenarios and working principles of the present disclosure, in the following related embodiments, description will be made only with the UE as the second communication device and the base station as the first communication device. However, this should not be understood as a limitation of the embodiments of the present disclosure.

In this step, the reference signal resource set is transmitted to the UE according to the index configuration information. Since the index configuration information can be dynamically configured, the reference signal resource set can be transmitted to the UE according to index configuration information configured in a specific application scenario in a target transmission mode corresponding to the index configuration information, thereby achieving flexible dynamic configuration and transmission of resources.

In an embodiment, the index configuration information is used to indicate a transmission mode in which the reference signal resource set is transmitted. That is to say, by associating the transmission mode of the reference signal resource set with the index configuration information, a reception mode of the UE is implicitly indicated, and an explicit and configurable transmission-reception beam pair scanning process is implemented.

In an embodiment, the index configuration information may include, but is not limited to:
subset index information;
   or,
repeated transmission index information.

In an embodiment, when the index configuration information includes the subset index information, the subset index information includes a plurality of subset indexes, the reference signal resource set is divided into a plurality of reference signal resource groups, and each reference signal resource group is configured with a corresponding subset index, where all the subset indexes may be identical or may be different, the number of the reference signal resource groups is not limited, and all the above parameters may be set according to specific application scenarios.

In an embodiment, a downlink parameter is configured for each reference signal resource group, and the downlink parameter is configured to indicate transmission state information carried by the reference signal resource group, where the transmission state information carried by all reference signal resource groups does not affect each other, that is, each of the reference signal resource groups are configured with respective downlink parameters. The downlink parameters may be identical or may be different, which will not be limited here.

In an embodiment, when a value of the transmission state information is a first preset value, it means that the same downlink spatial transmission filter is not used to transmit all reference signal resources in the reference signal resource groups. Alternatively, when the value of the transmission state information is a second preset value, it means that the same downlink spatial transmission filter is used to transmit all reference signal resources in the reference signal resource groups. In an implementation, when configuring the reference signal resource set, the base station groups different reference signal resources under the same set, and configures a subset index for each reference signal resource group. This subset index implicitly indicates a transmission mode at the base station side or a reception mode at the UE side. When the subset index is defaulted or not configured, it means that the transmission mode at the base station side or the reception mode at the UE side is transparent to a node at the other side, and different reference signal resource groups under the same reference signal resource set may be configured with "repetition" parameter respectively. In an implementation, if the "repetition" parameter of the reference signal resource group is set to 'on', the base station uses the same downlink spatial transmission filter to transmit all reference signal resources under the reference signal resource group; and if the "repetition" parameter of the reference signal resource group is set to 'off' or defaulted, the base station does not use the same downlink spatial transmission filter to transmit all reference signal resources under the reference signal resource group.

In an embodiment, when a value of the transmission state information is a first preset value, each of the reference signal resource groups is transmitted in the same first transmission mode according to all the subset indexes, and a plurality of different second transmission modes are switched according to the transmission state information to transmit all reference signal resources in the reference signal resource groups respectively. That is to say, when the value of the transmission state information is the first preset value, all the reference signal resource groups and the reference signal resources in each reference signal resource group are transmitted respectively to achieve effective transmission of the entire reference signal resource set.

In an embodiment, when the value of the transmission state information is a second preset value, a plurality of different third transmission modes are switched according to all the subset indexes to transmit all the reference signal resource groups respectively, and all reference signal resources in the reference signal resource groups are transmitted in the same fourth transmission mode according to the transmission state information. That is to say, when the value of the transmission state information is the second preset value, all the reference signal resource groups and the reference signal resources in each reference signal resource group are transmitted respectively to achieve effective transmission of the entire reference signal resource set.

In an embodiment, when the index configuration information includes the repeated transmission index information, the repeated transmission index information includes a plurality of repeated transmission indexes, and a number of repeated transmissions and time intervals between adjacent repeated transmissions configured by the first communication device, where the reference signal resource set is repeatedly transmitted within a preset cycle according to the plurality of repeated transmission indexes, the number of repeated transmissions, and the time intervals between adjacent repeated transmissions. and when the reference signal resource set is repeatedly transmitted each time, a repeated transmission index is correspondingly configured for the reference signal resource set. In an implementation, the reference signal resource set may be configured for periodic transmission, semi-persistent transmission or aperiodic transmission.

In an embodiment, the base station can repeatedly transmit all reference signal resources in the reference signal resource set according to all the repeated transmission indexes, the number of repeated transmissions, and the time intervals of adjacent repeated transmissions, and repeatedly transmit the reference signal resource set within a preset cycle in cooperation with the plurality of repeated transmission indexes, the number of repeated transmissions, and the time intervals of adjacent repeated transmissions, thereby achieving repeated transmission of the reference signal resource set and all reference signal resources in the reference signal resource set, and thus completing one transmission-reception beam pair scanning process.

In an embodiment, a downlink parameter is configured for the reference signal resource set, and the downlink parameter is configured to indicate transmission state information carried by the reference signal resource set. The specific type of the configured downlink parameter is not limited, which may be selectively set according to specific application scenarios.

In an embodiment, when a value of the transmission state information is a first preset value, it means that the same downlink spatial transmission filter is not used to transmit all reference signal resources in the reference signal resource set; alternatively, when the value of the transmission state information is a second preset value, it means that the same downlink spatial transmission filter is used to transmit all reference signal resources in the reference signal resource set. In an implementation, when the repeated transmission index is defaulted or not configured, it means that the transmission mode at the base station side or the reception mode at the UE side is transparent to a node at the other side, and for the reference signal resource set, a "repetition" parameter may be configured for the reference signal resource set. In an implementation, if the "repetition" parameter of the reference signal resource set is set to 'on', the base station uses the same downlink spatial transmission filter to transmit all reference signal resources under the reference signal resource set; and if the "repetition" parameter of the reference signal resource set is set to 'off or defaulted, the base station does not use the same downlink spatial transmission filter to transmit all reference signal resources under the reference signal resource set.

In an embodiment, when a value of the transmission state information is a first preset value, a plurality of different fifth transmission modes are switched to transmit all reference signal resources in the reference signal resource set respectively according to all the repeated transmission indexes, the number of repeated transmissions and the time intervals of adjacent repeated transmissions, and the signal resource set is repeatedly transmitted in the same sixth transmission mode, so as to achieve effective transmission of the entire reference signal resource set and complete one transmission-reception beam scanning process.

In an embodiment, when the value of the transmission state information is a second preset value, all reference signal resources in the reference signal resource set are repeatedly transmitted in the same seventh transmission mode based on all the repeated transmission indexes, the number of repeated transmissions and the time intervals of adjacent repeated transmissions, and a plurality of different eighth transmission modes are switched according to the transmission state information to respectively transmit the reference signal resource set, so as to achieve effective transmission of the entire reference signal resource set and complete one transmission-reception beam scanning process.

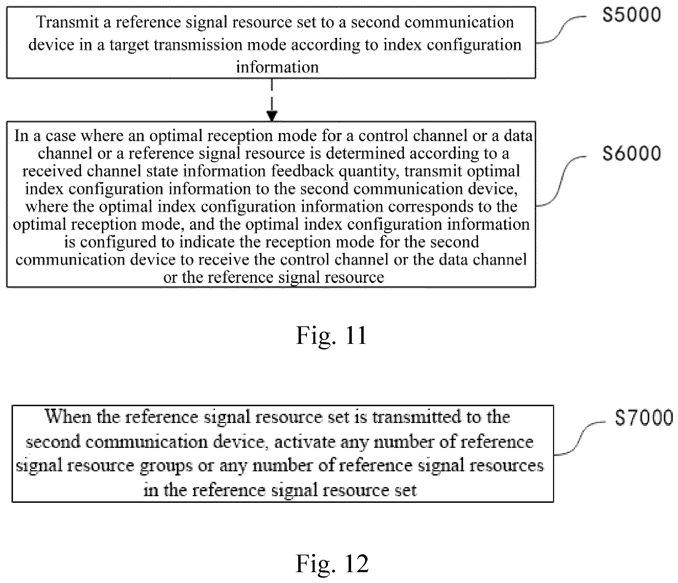

As shown in Fig. 11, in an embodiment of the present disclosure, the signal transmission method further includes but is not limited to step S6000.

At S6000, in a case where an optimal reception mode for a control channel, a data channel or a reference signal resource is determined according to a received channel state information feedback quantity, optimal index configuration information is transmitted to the second communication device, where the optimal index configuration information corresponds to the optimal reception mode, and the optimal index configuration information is configured to indicate the reception mode of the second communication device for the control channel, the data channel or the reference signal resource.

In this step, the base station can associate optimal index configuration information with transmission in the control channel, transmission in the data channel or transmission of the reference signal resource respectively, to indicate the UE reception mode or the base station transmission mode, that is, by transmitting the optimal index configuration information, it is conducive to implement an explicit and configurable transmission-reception beam pair scanning process.

It should be noted that since the related embodiments of the above signal transmission method and the related embodiments of the above signal reception method belong to the same inventive concept, and are only different in execution subject, the specific implementations of the related embodiments of the above signal transmission method may refer to the specific implementations of the signal reception methods in the previous embodiments, which will not be repeated here to avoid redundancy.

As shown in Fig. 12, in an embodiment of the present disclosure, the signal transmission method further includes but is not limited to step S7000.

At S7000, when the reference signal resource set is transmitted to the second communication device, any number of reference signal resource groups or any number of reference signal resources in the reference signal resource set are activated.

In this step, considering that the configuration, activation, deactivation and other operations on the reference signal resource set in the existing protocol are defined at the set level, it means that all reference signal resources in the same reference signal resource set will be configured, activated or deactivated at the same time. This configuration method has poor flexibility and is not conducive to dynamic control of any reference signal resource. However, for a specific functional module deployed at the base station side or UE side, there is a demand for flexible transmission of any reference signal resources under the same set or some reference signal resources under the same set. Therefore, in this step, an enhanced configuration method for the reference signal resource set is considered, that is, when the reference signal resource set is transmitted to the UE, any number of reference signal resource groups or any number of reference signal resources in the reference signal resource set are activated. In this way, the activated reference signal resource groups or the activated reference signal resources in the reference signal resource set will be transmitted, and the rest will not be activated for transmission, thus achieving more flexible and dynamic configuration and transmission of resources.

In an embodiment, when activating any number of reference signal resource groups, if one of the reference signal resource groups is activated, the reference signal resource group is transmitted, or if one of the reference signal resource groups is not activated, no reference signal resource group is transmitted; alternatively, when activating any number of reference signal resources in the reference signal resource set, if one of the reference signal resources is activated, the reference signal resource is transmitted, or if one of the reference signal resources is not activated, no reference signal resource is transmitted. In an implementation, when configuring the reference signal resource set, the base station groups different reference signal resources under the same set, and configures a subset index for each reference signal resource group, so in the subsequent transmission of reference signal resources, one or more subset indexes are activated/deactivated, indicating that all reference signal resources under the corresponding subset will be activated/deactivated at the same time.

In an embodiment, when transmitting the reference signal resource set to the UE, any number of reference signal resource groups or any number of reference signal resources in the reference signal resource set are activated through radio resource control signaling, media access control-control element signaling or downlink control information signaling.

Several examples are given below to clearly illustrate the working principles of the above related embodiments.

### Example four:

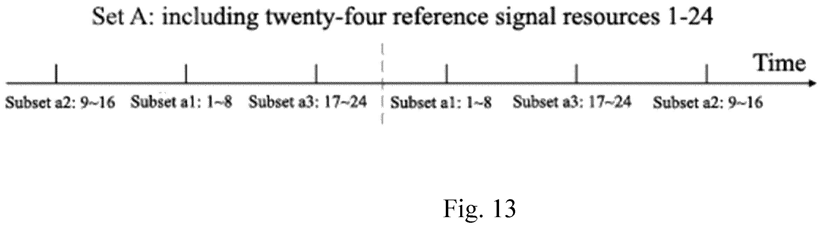

As shown in Fig. 13, assume a periodic set A including twenty-four reference signal resources, and the reference signal resource indexes are 1 to 24 respectively. The set A is divided into three subsets, the subsets a1, a2 and a3 include reference signal resources 1-8, 9-16 and 17-24 respectively. Then, at the periodic transmission time of the set A, one of the subsets may be activated through radio resource control signaling, media access control-control element signaling or downlink control information signaling, so the reference signal resources under the activated subset will be actually transmitted, while the reference signal resources under the non-activated subset will not be actually transmitted.

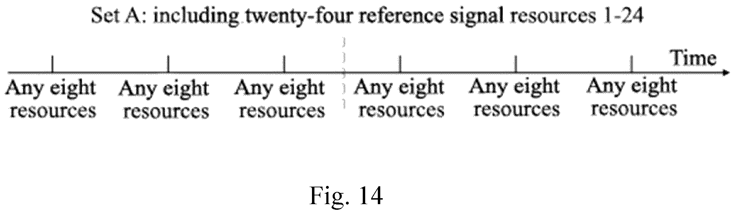

As shown in Fig. 14, assume a periodic set A including twenty-four reference signal resources, and the reference signal resource indexes are 1 to 24 respectively. Then, at the periodic transmission time of the set A, eight of the reference signal resources may be randomly activated through radio resource control signaling, media access control-control element signaling or downlink control information signaling, so the activated reference signal resources will be actually transmitted, while non-activated reference signal resources will not be actually transmitted.

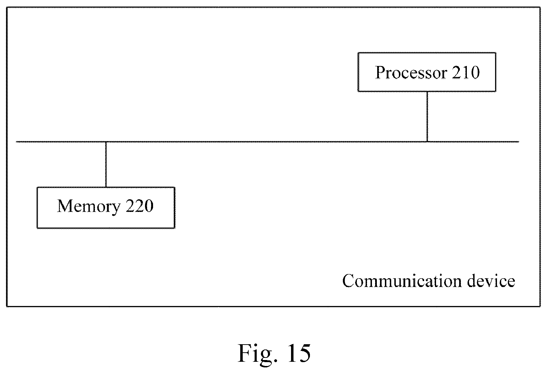

In addition, as shown in Fig. 15, an embodiment of the present disclosure further discloses a communication device, including: at least one processor 210; and at least one memory 220 for storing at least one program, where the at least one program, when executed by the at least one processor 210, implements the signal reception method or the signal transmission method as described in any one of the previous embodiments.

Moreover, an embodiment of the present disclosure further discloses a computer-readable storage medium storing computer-executable instructions, where the computer-executable instructions are configured to perform the signal reception method or the signal transmission method as described in any one of the previous embodiments.

In addition, an embodiment of the present disclosure further discloses a computer program product, including a computer program or computer instructions, where the computer program or computer instructions are stored in a computer-readable storage medium, a processor of a computer device reads the computer program or computer instructions from the computer-readable storage medium, and the processor executes the computer program or computer instructions, so that the computer device performs the signal reception method or signal transmission method as described in any one of the previous embodiments.

The system architecture and application scenarios described in the embodiments of the present disclosure are used to clearly explain the technical schemes of the embodiments of the present disclosure, and do not constitute a limitation on the technical schemes provided by the embodiments of the present disclosure. Those having ordinary skill in the art will know that with the evolution of the system architecture and the emergence of new application scenarios, the technical schemes provided by the embodiments of the present disclosure are also applicable to similar technical problems.

Those having ordinary skill in the art can understand that all or some steps, systems, and functional modules/units in the devices in the methods disclosed above may be implemented as software, firmware, hardware, and appropriate combinations thereof.

In hardware implementations, the division between functional modules/units mentioned in the above description does not necessarily correspond to the division of physical components. For example, one physical component may have a plurality of functions, or one function or step may be performed cooperatively by several physical components. Some or all of the physical components may be implemented as software executed by a processor, such as a central processor, a digital signal processor, or a microprocessor, or as hardware, or as an integrated circuit, such as an application specific integrated circuit. Such software may be distributed on computer-readable media, which may include computer storage media (or non-transitory media) and communication media (or transitory media). As is known to those having ordinary skill in the art, the term "computer storage media" includes volatile and nonvolatile, removable and non-removable media implemented in any method or technology for storage of information such as computer-readable instructions, data structures, program modules or other data. The computer storage media include, but are not limited to, RAM, ROM, EEPROM, flash memory or other memory technology, CD-ROM, Digital Versatile Disk (DVD) or other optical disk storage, magnetic cassettes, tapes, disk storage or other magnetic storage devices, or any other media which is used to store the desired information and capable of being accessed by a computer. Additionally, it is known to those having ordinary skill in the art that communication media may typically include computer-readable instructions, data structures, program modules or other data in a modulated data signal such as a carrier wave or other transport mechanism, and may include any information delivery media.

The terms "component", "module", "system", etc. used in this Description are used to refer to computer-related entities, hardware, firmware, a combination of hardware and software, software, or software in execution. For example, a component may be, but is not limited to, a process, processor, object, executable file, thread of execution, program or computer running on a processor. Through the illustrations, both applications running on the computing device and the computing device may be components. One or more components may reside in the process or thread of execution, and the component may be localized on one computer or distributed between two or more computers. Additionally, these components may execute from various computer-readable media storing various data structures. The components may, for example, communicate through a local or remote process according to a signal with one or more data packets, such as data from two components interacting with another component of a local system, a distributed system, or a network, such as the Internet interacting with other systems via signals.

## Claims

1. A signal reception method, comprising:
receiving a reference signal resource set, which is transmitted by a first communication device, in a target reception mode according to received index configuration information.

2. The signal reception method of claim 1, wherein the index configuration information is configured to indicate a reception mode in which the reference signal resource set is received, and the index configuration information comprises:
subset index information;
or,
repeated transmission index information.

3. The signal reception method of claim 2, wherein:
in response to the index configuration information comprising the subset index information, the subset index information comprises a plurality of subset indexes, the reference signal resource set is divided into a plurality of reference signal resource groups, and each of the reference signal resource groups is correspondingly configured with a respective one of the subset indexes.

4. The signal reception method of claim 3, wherein:
each of the reference signal resource groups is configured with a downlink parameter, and the downlink parameter is configured to indicate transmission state information which is carried by the reference signal resource group.

5. The signal reception method of claim 4, wherein:
in response to a value of the transmission state information being a first preset value, a plurality of different first reception modes are switched according to all the subset indexes to receive each of the reference signal resource groups respectively, and all reference signal resources in the reference signal resource groups are received in the same second reception mode according to the transmission state information.

6. The signal reception method of claim 4, wherein:
in response to the value of the transmission state information being a second preset value, each of the reference signal resource groups is received in the same third reception mode according to all the subset indexes, and a plurality of different fourth reception modes are switched according to the transmission state information to receive all the reference signal resources in the reference signal resource groups respectively.

7. The signal reception method of claim 2, wherein:
in response to the index configuration information comprising the repeated transmission index information, the repeated transmission index information comprises a plurality of repeated transmission indexes, and a number of repeated transmissions and time intervals of adjacent repeated transmissions which are configured by the first communication device, wherein the reference signal resource set is repeatedly received within a preset cycle according to the repeated transmission indexes, the number of repeated transmissions and the time intervals of adjacent repeated transmissions, and each received reference signal resource set is correspondingly configured with a respective one of the repeated transmission indexes.

8. The signal reception method of claim 7, wherein:
a downlink parameter is configured for the reference signal resource set, and the downlink parameter is configured to indicate transmission state information which is carried by the reference signal resource set.

9. The signal reception method of claim 8, wherein:
in response to a value of the transmission state information being a first preset value, all the reference signal resources in the reference signal resource set are received respectively in the same fifth reception mode according to the repeated transmission indexes, the number of repeated transmissions and the time intervals of adjacent repeated transmissions, and a plurality of different sixth reception modes are switched according to the transmission state information to repeatedly receive the reference signal resource set.

10. The signal reception method of claim 8, wherein:
in response to the value of the transmission state information being a second preset value, different seventh reception modes are switched according to all the repeated transmission indexes, the number of repeated transmissions and the time intervals of adjacent repeated transmissions to receive all the reference signal resources in the reference signal resource set respectively, and the reference signal resource set is repeatedly received in the same eighth reception mode according to the transmission state information.

11. The signal reception method of claim 1, further comprising:
reporting a channel state information feedback quantity to the first communication device, so that the first communication device determines an optimal transmission mode and an optimal reception mode for a control channel, a data channel, or a reference signal resource according to the channel state information feedback quantity.

12. The signal reception method of claim 11, wherein the channel state information feedback quantity comprises:
at least one piece of reference signal resource index information, a channel state information measurement result or the index configuration information.

13. The signal reception method of claim 12, wherein:
in response to the index configuration information comprising subset index information and the channel state information measurement result comprising first measurement results for different reference signal resources in the same reference signal resource group of which the number is a third preset value, which indicate that the first communication device is requested to transmit target reference signal resources of which the number is the third preset value, and wherein the reference signal resource set is divided into the plurality of reference signal resource groups;
or,
in response to the index configuration information comprising subset index information and the channel state information measurement result comprising second measurement results for the same reference signal resource index of which the number is a third preset value, which indicate that the first communication device is requested to transmit target reference signal resources of which the number is the third preset value.

14. The signal reception method of claim 11, further comprising:
receiving optimal index configuration information transmitted by the first communication device, wherein the optimal index configuration information corresponds to the optimal reception mode, and the optimal index configuration information is configured to indicate a reception mode for the control channel, the data channel or the reference signal resource.

15. A signal transmission method, comprising:
transmitting a reference signal resource set to a second communication device in a target transmission mode according to index configuration information.

16. The signal transmission method of claim 15, wherein the index configuration information is configured to indicate a transmission mode in which the reference signal resource set is transmitted, and the index configuration information comprises:
subset index information;
or,
repeated transmission index information.

17. The signal transmission method of claim 16, wherein:
in response to the index configuration information comprising the subset index information, the subset index information comprises a plurality of subset indexes, the reference signal resource set is divided into a plurality of reference signal resource groups, and each of the reference signal resource groups is correspondingly configured with a respective one of the subset indexes.

18. The signal transmission method of claim 17, wherein:
a downlink parameter is configured for each of the reference signal resource groups, and the downlink parameter is configured to indicate transmission state information which is carried by the reference signal resource group.

19. The signal transmission method of claim 18, wherein:
in response to a value of the transmission state information being a first preset value, each of the reference signal resource groups is transmitted in the same first transmission mode according to all the subset indexes, and a plurality of different second transmission modes are switched according to the transmission state information to transmit all the reference signal resources in the reference signal resource groups respectively.

20. The signal transmission method of claim 18, wherein:
in response to the value of the transmission state information being a second preset value, a plurality of different third transmission modes are switched according to all the subset indexes to transmit each of the reference signal resource groups respectively, and all the reference signal resources in the reference signal resource groups are transmitted in the same fourth transmission mode according to the transmission state information.

21. The signal transmission method of claim 16, wherein:
in response to the index configuration information comprising the repeated transmission index information, the repeated transmission index information comprises a plurality of repeated transmission indexes, a configured number of repeated transmissions, and time intervals of adjacent repeated transmissions, wherein the reference signal resource set is repeatedly transmitted within a preset cycle according to the plurality of repeated transmission indexes, the number of repeated transmissions and the time intervals of adjacent repeated transmissions, and upon each repeated transmission of the reference signal resource set, one of the repeated transmission indexes is correspondingly configured for the reference signal resource set.

22. The signal transmission method of claim 21, wherein:
a downlink parameter is configured for the reference signal resource set, and the downlink parameter is configured to indicate transmission state information carried by the reference signal resource set.

23. The signal transmission method of claim 22, wherein:
in response to a value of the transmission state information being a first preset value, a plurality of different fifth transmission modes are switched according to the repeated transmission indexes, the number of repeated transmissions, and the time intervals of adjacent repeated transmissions to transmit all the reference signal resources in the reference signal resource set respectively, and the reference signal resource set is repeatedly transmitted in the same sixth transmission mode according to the transmission state information.

24. The signal transmission method of claim 22, wherein:
in response to the value of the transmission state information being a second preset value, all the reference signal resources in the reference signal resource set are transmitted repeatedly in the same seventh transmission mode according to the repeated transmission indexes, the number of repeated transmissions, and the time intervals of adjacent repeated transmissions, and a plurality of different eighth transmission modes are switched according to the transmission state information to transmit the reference signal resource set respectively.

25. The signal transmission method of claim 15, further comprising:
in response to an optimal reception mode for a control channel, a data channel or a reference signal resource being determined according to a received channel state information feedback quantity, transmitting optimal index configuration information to the second communication device, wherein the optimal index configuration information corresponds to the optimal reception mode, and the optimal index configuration information is configured to indicate the reception mode for the second communication device to receive the control channel, the data channel or the reference signal resource.

26. A communications device, comprising:
at least one processor; and
at least one memory configured to store at least one program, wherein:
the at least one program, when executed by the at least one processor, performs the signal reception method of any one of claims 1 to 14, or performs the signal transmission method of any one of claims 15 to 25.

27. A computer-readable storage medium storing a processor-executable program, wherein the processor-executable program, when executed by a processor, performs the signal reception method of any one of claims 1 to 14, or performs the signal transmission method of any one of claims 15 to 25.
